# EUROPÄISCHE PATENTSCHRIFT

(11) **EP 2 621 746 B1**
(45) Veröffentlichungstag und Bekanntmachung des Hinweises auf die Patenterteilung: **04.06.2014**
(21) Anmeldenummer: 11788029.4
(22) Anmeldetag: 29.09.2011
(51) Int. Cl.: B60K 11/00, B60K 25/04, B60R 16/08

(54) **HYDROSTATISCHER ANTRIEB**
HYDROSTATIC DRIVE
ENTRAÎNEMENT HYDROSTATIQUE

(30) Priorität: 30.09.2010 DE 102010047194
(43) Veröffentlichungstag der Anmeldung: 07.08.2013
(73) Patentinhaber: Robert Bosch GmbH, 70442 Stuttgart (DE)
(72) Erfinder: GEISSLER, Grit, 01277 Dresden (DE); VOGL, Karl-Heinz, 88444 Ummendorf (DE); FRASCH, Michael, 89081 Ulm (DE)
(74) Vertreter: Thürer, Andreas
(86) Internationale Anmeldenummer: PCT/EP2011/004861
(87) Internationale Veröffentlichungsnummer: WO 2012/041497

(56) Entgegenhaltungen:
- DE-A1- 3 838 404
- US-A- 4 323 137
- US-A1- 2003 062 212

## Beschreibung

Die Erfindung betrifft einen hydrostatischen Antrieb gemäß dem Oberbegriff des Patentanspruchs 1.

In der DE 38 38 404 A1 ist ein derartiger Antrieb für einen Lüfter offenbart. Eine Konstantpumpe treibt dabei einen Konstantmotor hydraulisch an, der wiederum zum Antrieb eines Lüfters dient. Parallel zum Konstantmotor ist ein elektrisch verstellbares Druckbegrenzungsventil als Bypass angeordnet, womit eine Drehzahl des Konstantmotors und somit des Lüfters einstellbar ist.

Die Druckschrift DE 35 41 446 A1 und DE 36 28 444 A1 zeigen ebenfalls einen hydrostatischen Antrieb. Eine Konstantpumpe treibt wie in der vorhergehenden Druckschrift einen Konstantmotor an, wobei über ein parallel zum Konstantmotor angeordnetes Druckbegrenzungsventil Druckmittel am Konstantmotor vorbeigeführt werden kann. Gemeinsam mit der Konstantpumpe wird eine weitere Konstantpumpe zur Druckmittelversorgung von hydraulischen Verbrauchern angetrieben.

Nachteilig bei den genannten Druckschriften ist, dass das über das Druckbegrenzungsventil abströmende Druckmittel ungenutzt zum Tank strömt und somit einen Energieverlust darstellt.

Demgegenüber liegt der Erfindung die Aufgabe zugrunde, einen hydrostatischen Antrieb mit geringen Energieverlusten und geringem vorrichtungstechnischem Aufwand zu schaffen.

Diese Aufgabe wird gelöst durch einen hydrostatischen Antrieb gemäß den Merkmalen des Patentanspruchs 1.

Erfindungsgemäß hat ein hydrostatischer Antrieb, insbesondere ein hydrostatischer Lüfterantrieb, eine hydraulische Konstantpumpe zur Druckmittelversorgung eines ersten hydraulischen Kreislaufs. Die Konstantpumpe dient hierbei insbesondere zum Antreiben eines Hydromotors, insbesondere eines Konstantmotors für einen Lüfter, beispielsweise zur Motorkühlung. Des Weiteren hat der Antrieb eine Hydromaschine zur Druckmittelversorgung wenigstens eines zweiten hydraulischen Kreislaufs mit mindestens einem weiteren hydraulischen Verbraucher. Die Konstantpumpe ist dabei mit der Hydromaschine hydraulisch kombinierbar.

Diese Lösung hat den Vorteil, dass, beispielsweise wenn die Konstantpumpe einen konstanten Druckmittelvolumenstrom fördert und der erste hydraulische Kreislauf, insbesondere der Konstantmotor, nur einen bestimmten Anteil dieses Druckmittelvolumenstroms benötigt, der überschüssige Volumenstrom durch die Kombination zur Druckmittelversorgung des zweiten hydraulischen Kreislaufs dienen kann. Des Weiteren ist denkbar, dass bei einer Kombination die Hydromaschine als Hydromotor die Konstantpumpe antreibt, wenn im zweiten hydraulischen Kreislauf kein Druckmittel oder nur eine geringe Druckmittelmenge benötigt wird. Somit führt der im ersten Kreislauf nicht benötigte von der Konstantpumpe geförderte Druckmittelvolumenstrom anders als im eingangs erläuterten Stand der Technik allenfalls zu geringen Energieverlusten. Er dient zur zusätzlichen Druckmittelversorgung des zweiten hydraulischen Kreislaufs oder zum Antrieb der Konstantpumpe.

Mit Vorteil erfolgt die Kombination der Konstantpumpe mit der Hydromaschine über eine Verbindung des ersten Kreislaufs mit dem zweiten Kreislauf über ein Kombinationsventil.

Als Kombinationsventil eignet sich besonders ein in Strömungsrichtung hin zum zweiten Kreislauf öffnendes Rückschlagventil, das ein vorrichtungstechnisch einfach aufgebautes Bauteil und äußerst kostengünstig ist.

In weiterer Ausgestaltung der Erfindung ist eine Verstellvorrichtung zum Einstellen eines Verdrängungsvolumens der Hydromaschine entweder in Abhängigkeit vom Betriebszustand im ersten hydraulischen Kreislauf oder in Abhängigkeit eines höchsten Lastdrucks der Verbraucher des zweiten hydraulischen Kreislaufs verstellbar. Hierdurch kann die Hydromaschine nicht nur in Abhängigkeit des höchsten Lastdrucks, sondern auch in Abhängigkeit vom Betriebszustand im ersten hydraulischen Kreislauf gesteuert werden.

Die Verstellvorrichtung kann dabei elektrohydraulisch so eingestellt werden, dass der Druck am Druckanschluss der Hydromaschine dem notwendigen Druck im ersten Kreislauf entspricht. Vorzugsweise wird an die Verstellvorrichtung der Hydromaschine über eine Fluidleitung aus dem ersten hydraulischen Kreislauf ein solcher Druck gemeldet wird, dass sich der entsprechende Druck einstellt.

Vorteilhafterweise ist der Pumpendruck im ersten hydraulischen Kreislauf über ein vorgesteuertes Druckbegrenzungsventil begrenzt. Dessen Schließkörper ist in Schließrichtung von einem über ein verstellbares Vorsteuerventil einstellbaren Schließdruck beaufschlagt. Der Schließdruck wird dabei an die Verstellvorrichtung der Hydromaschine gemeldet, sofern zwischen dem im ersten Kreislauf gewünschten Pumpendruck und dem höchsten Lastdruck aus dem zweiten Kreislauf unter Berücksichtigung der Einstellung des Druckbegrenzungsventils eine bestimmte Relation besteht.

Zur Energiespeicherung und Energierückgewinnung kann an den zweiten hydraulischen Kreislauf ein Hydrospeicher angeschlossen sein, der bei einem Bremsvorgang von der Hydromaschine, die dann als Pumpe arbeitet, bei einer Kombination aber auch von der Konstantpumpe aufladbar ist.

Mit Vorteil ist der Hydrospeicher dann über ein Speicherladeventil gesteuert.

Zum Einstellen des Schließdrucks und zum Steuern des Speicherladeventils kann eine Electronic Control Unit dienen.

Die Konstantpumpe und die Hydropumpe sind vorrichtungstechnisch mit geringem Aufwand über eine gemeinsame Antriebswelle angetrieben.

Um die Hydromaschine als Hydropumpe und Hydromotor einzusetzen, ist diese als Verstellpumpe mit einem stufenlos verstellbaren Schwenkwinkel durch eine Nulllage ausgebildet. Sonstige vorteilhafte Weiterbildungen der Erfindung sind Gegenstand weiterer Unteransprüche.

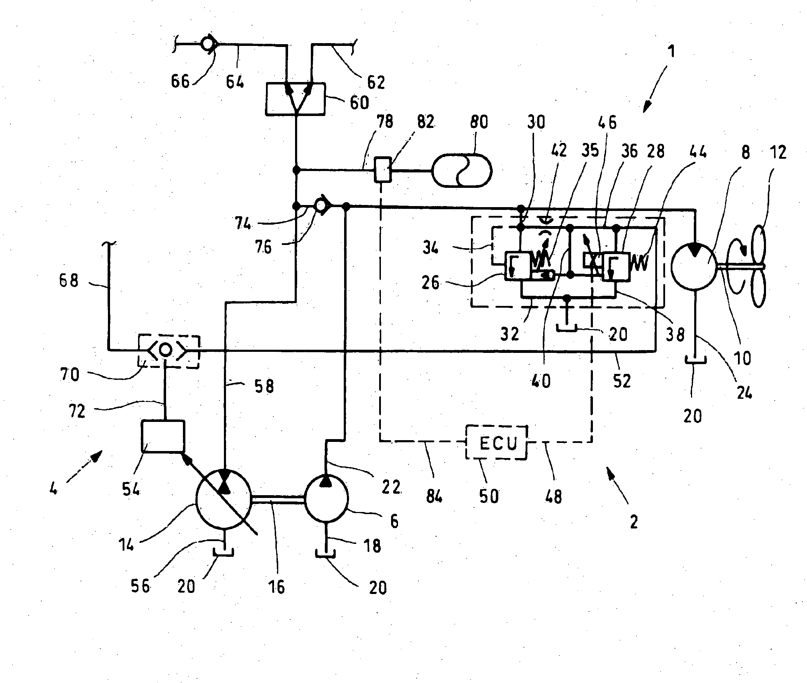

Im Folgenden wird ein bevorzugtes Ausführungsbeispiel der Erfindung anhand einer einzigen Zeichnung näher erläutert. Diese zeigt ein Blockschaltbild eines erfindungsgemäßen hydrostatischen Antriebs gemäß einem Ausführungsbeispiel.

Die einzige Figur zeigt einen hydrostatischen Antrieb 1 mit einem ersten hydraulischen Kreislauf 2 und mit einem zweiten hydraulischen Kreislauf 4. Der erste, in der Figur rechts dargestellte, hydraulische Kreislauf 2 hat eine als Konstantpumpe 6 ausgebildete Hydromaschine, die zum Antrieb einer als Konstantmotor 8 ausgebildeten weiteren Hydromaschine dient. Mit dem Konstantmotor 8 wird über eine Antriebswelle 10 ein Lüfterrad 12, beispielsweise zur Motorkühlung, angetrieben. Eine Druckmittelversorgung des zweiten, in der Figur links dargestellten hydraulischen Kreislaufs 4 erfolgt über eine in ihrem Hubvolumen verstellbare Hydromaschine 14, wobei diese und die Konstantpumpe 6 über eine gemeinsame Welle 16 von einem nicht dargestellten Motor, beispielsweise einem Dieselmotor, angetrieben sind. Die Hydromaschine 14 ist insbesondere als Axialkolbenmaschine mit einer über null verschwenkbaren Schrägscheibe ausgebildet, kann also bei gleicher Drehrichtung sowohl als Pumpe als auch als Motor arbeiten.

Die Konstantpumpe 6 fördert Druckmittel von einem Tank 20 über eine Tankleitung 18 in eine Druckleitung 22, an die der Konstantmotor 8 angeschlossen ist. Über den Konstantmotor 8 strömt dann das von der Konstantpumpe 6 geförderte Druckmittel über eine Abströmleitung 24 zurück zum Tank 20. Zur Druckbegrenzung eines Pumpendrucks in der Druckleitung 22 ist ein Druckbegrenzungsventil (DBV) 26 vorgesehen, das über ein Vorsteuerventil 28 vorgesteuert ist. Mit dem DBV 26 ist eine Druckmittelverbindung von einer von der Druckleitung 22 abzweigenden Zweigleitung 30 und einer mit dem Tank 20 verbundenen Tankleitung 32 aufsteuerbar. Ein Schließkörper des DBV 26 wird dabei in Öffnungsrichtung über eine an der Zweigleitung 30 angeschlossene Steuerleitung 34 vom Pumpendruck in der Druckleitung 22 beaufschlagt. In Schließrichtung wird der Schließkörper mit einer Federkraft einer einstellbaren Feder 35 und einem vom Vorsteuerventil 28 einstellbaren Vorsteuerdruck bzw. Schließdruck beaufschlagt. Der Schließkörper des DBV 26 wird von der Feder 35 in Schließrichtung mit einer Kraft beaufschlagt, die einem Druck von etwa 30 bar äquivalent ist. Das bedeutet, dass bei angesprochenem Druckbegrenzungsventil über die Steueröldüse ein Druckabfall von 30 bar herrscht, der zusammen mit dem Durchflussquerschnitt den über das Vorsteuerventil fließenden Steuerölstrom bestimmt. Der Öffnungsdruck in der Steuerleitung 34 liegt also um 30 bar höher als der am Vorsteuerventil 28 mit Hilfe des Elektromagneten 46 eingestellte Schließdruck.

Das Vorsteuerventil 28 ist eingangsseitig mit einer von der Zweigleitung 30 abzweigenden Vorsteuerleitung 36 verbunden. Ausgangsseitig ist das Vorsteuerventil 28 an einer mit dem Tank 20 verbundenen Tankleitung 38 angeschlossen. Von der Vorsteuerleitung 36 zweigt eine Steuerleitung 40 ab, die zum einen zur hydraulischen Betätigung bzw. zur Druckbeaufschlagung des Schließkörpers des DBV 26 mit dem Schließdruck und zum anderen zur Druckbeaufschlagung eines Schließkörpers des Vorsteuerventils 28 mit dem Schließdruck in Öffnungsrichtung dient. Stromaufwärts von der abzweigenden Steuerleitung 40 ist in der Vorsteuerleitung 36 eine Steueröldüse 42 angeordnet. Der Schließkörper des Vorsteuerventils 28 wird des Weiteren über eine Feder 44 mit einer Federkraft in Schließrichtung beaufschlagt. In Öffnungsrichtung ist der Schließkörper neben dem Vorsteuer- bzw. Schließdruck über einen elektrischen Aktuator 46 mit einer Öffnungskraft beaufschlagbar. Der Aktuator 46 ist über eine elektrische Steuerleitung 48 mit einer Electronic Control Unit (ECU) 50 verbunden und von dieser steuerbar. Der Schließdruck in der Vorsteuerleitung 36 stromabwärts der Steueröldüse 42 und somit in der Steuerleitung 40 ist über das Vorsteuerventil 28 einstellbar. Mit dem Schließdruck wiederum ist der Öffnungsdruck des DBV 26 und somit der maximale Pumpendruck einstellbar, von dem wegen der Lüfterradkennlinie die Drehzahl des Konstantmotors 8 und des damit angetriebenen Lüfterrads 12 abhängt.

Stromabwärts von der Abzweigung der Steuerleitung 40 von der Vorsteuerleitung 36 ist an die Vorsteuerleitung 36 eine Meldeleitung 52 angeschlossen, über die der Schließdruck an eine Verstellvorrichtung 54 der Hydromaschine 14 des zweiten hydraulischen Kreislaufs 4 gemeldet wird.

Die Hydromaschine 14 ist zum einen an eine mit dem Tank 20 verbundene Tankleitung 56 und zum anderen an eine Druckleitung 58 angeschlossen. Die Druckleitung ist über ein Prioritätsventil 60 mit einer Lenkleitung 62 für eine nicht dargestellte hydraulische Lenkung und mit einer Arbeitsleitung 64 zur Druckmittelversorgung von nicht dargestellten hydraulischen Verbrauchern verbunden. In der Arbeitsleitung 64 ist ein in Druckmittelströmungsrichtung weg vom Prioritätsventil 60 öffnendes Rückschlagventil 66 angeordnet.

Ein höchster Lastdruck der nicht dargestellten Verbraucher oder ein Lastdruck der nicht dargestellten hydraulischen Lenkung wird über eine Lastmeldeleitung 68 zur Verstellvorrichtung 54 gemeldet. Um entweder den Lastdruck in der Lastmeldeleitung 68 oder den Schließdruck in der Meldeleitung 52, je nachdem welcher Druck der höhere ist, an die Verstellvorrichtung 54 zu melden, ist ein Wechselventil 70 vorgesehen. An einem Eingang des Wechselventils 70 ist dabei die Lastmeldeleitung 68 und an dem anderen Eingang die Meldeleitung 52 und am Ausgang eine Verbindungsleitung 72 zur Verstellvorrichtung 54 angeschlossen. Eine derartige Verstellvorrichtung 54 ist beispielsweise in der DE 199 04 616 A1 gezeigt, wobei es sich um einen Druck- und Förderstromregler (DFR) 54 handelt. Der DFR 54 bewirkt, dass sich in der Druckleitung 58 ein Druck einstellt, der um einer Kraft einer in dem DFR 54 angeordneten Regelfeder äquivalente Druckdifferenz, zum Beispiel 20 bar, über dem Druck in der Verbindungsleitung 72 liegt. Diese Druckdifferenz wird als Regel-Delta p bezeichnet. Die Kraft der Feder 35 ist einem Druck äquivalent, der größer als das Regel-Delta p der Hydromaschine 14 ist, zum Beispiel 10 bar über dem Regel-Delta p liegt und 30 bar ist.

Die Konstantpumpe 6 ist erfindungsgemäß mit der Hydromaschine 14 hydraulisch kombinierbar. Hierzu ist die Druckleitung 22 mit der Druckleitung 58 über eine Kombinationsleitung 74 verbunden. Diese ist an die Druckleitung 58 zwischen der Hydromaschine 14 und dem Prioritätsventil 60 angeschlossen. In der Kombinationsleitung 74 ist ein als Rückschlagventil 76 ausgebildetes Kombinationsventil vorgesehen. Dieses öffnet in einer Druckmittelströmungsrichtung von der Druckleitung 22 des ersten hydraulischen Kreislaufs 2 zur Druckleitung 58 des zweiten hydraulischen Kreislaufs 4.

Durch die Kombination der beiden hydraulischen Kreisläufe 2 und 4 über die Kombinationsleitung 76 kann ein bei einer vorgegebenen, von der Temperatur eines Kühlmittels abhängige Drehzahl des Lüfterrads nicht zum Antrieb des Hydromotors 8 benötigter Druckmittelvolumenstrom aus dem ersten hydraulischen Kreislauf zur zusätzlichen Druckmittelversorgung im zweiten hydraulischen Kreislauf eingesetzt werden. Dieser Druckmittelvolumenstrom wird nicht über das Druckbegrenzungsventil 26 zum Tank 20 abgegeben, so dass ein Energieverlust, wie er im Eingangs erläuterten Stand der Technik entsteht, vermieden ist.

Im Folgenden wird die Funktionsweise des erfindungsgemäßen Antriebs 1 erläutert.

Der Schließdruck wird über die Meldeleitung 52 an den DFR 54 gemeldet, wenn der Schließdruck höher als der höchste Lastdruck der betätigten hydraulischen des Verbraucher des zweiten Kreislaufs 4 ist. Somit wird über die Verbindungsleitung 72 an den DFR 54 entweder der Schließdruck oder ein höherer Lastdruck aus der Lastmeldeleitung 68 gemeldet. Das Verdrängungsvolumen der Hydromaschine 14 wird dann über den DFR 54 derart eingestellt, dass ein Arbeitsdruck in der Druckleitung 58 um das Regel-Delta p über dem gemeldeten Druck liegt. Der Arbeitsdruck in der Druckleitung 58 ist somit kleiner als der Druck in der Druckleitung 22, wenn der höchste Lastdruck der hydraulischen Verbraucher des Kreislaufs 4 plus das Regel-Delta p kleiner ist als der Schließdruck plus ein zur Kraft der Feder 35 äquivalenter Druck. Nicht benötigter Druckmittelvolumenstrom des ersten hydraulischen Kreislaufs 2 wird dann von der Konstantpumpe 6 über das Kombinationsventil 76 in die Druckleitung 58 des zweiten hydraulischen Kreislaufs 4 gefördert. Dieser zusätzliche Druckmittelvolumenstrom in der Druckleitung 58 kann zur Druckmittelversorgung der hydraulischen Verbraucher des Kreislaufs 4 dienen, wodurch die Hydromaschine 14 weniger stark ausschwenkt. Falls diese Verbraucher keine Leistung benötigen, ließt der überflüssige Volumenstrom der Konstantpumpe 6 über des Rückschlagventil 76 und die verstellbare Hydromaschine 14 zurück zum Tank. Die Hydromaschine 14 schwenkt in diesem Fall über null und treibt als Hydromotor die Konstantpumpe 6 an. Durch die als Hydromotor eingesetzte Hydromaschine 14 wird der die Konstantpumpe 6 antreibende Motor entlastet.

In den beiden aufgezeigten Fällen, in denen von den Verbrauchern des Kreislaufs 4 keine Leistung abgenommen oder der Lastdruck niedrig ist, kann am Vorsteuerventil 28 durch entsprechende Ansteuerung des Elektromagneten 46 ein solcher Schließdruck eingestellt werden, dass in den Leitungen 22 und 58 ein für die gewünschte Drehzahl des Lüfterrad notwendiger Druck ansteht. Der Schließdruck ist dann nur um das Regel-Delta p der Hydromaschine 14 niedriger als der notwendige Druck in den Leitungen 22 und 58. Das Druckbegrenzungsventil 26 ist dabei geschlossen und stellt nur noch eine Druckabsicherung dar. ein Verluststrom über das Vorsteuerventil ist durch das Regel-Delta p und durch den Durchflussquerschnitt der Steueröldüse 42 gegeben.

Wird die Summe aus dem höchsten Lastdruck der hydraulischen Verbraucher des Kreislaufs 4 plus das Regel-Delta p größer ist als der Schließdruck plus ein zur Kraft der Feder 35 äquivalenter Druck, dann ist der Arbeitsdruck in der Druckleitung 58 höher als der Pumpendruck in der Druckleitung 22 und das Rückschlagventil 76 ist geschlossen, womit die Kombination der Konstantpumpe 6 mit der Hydromaschine 14 unterbrochen ist. In diesem Fall fließt der überflüssige Volumenstrom der Konstantpumpe 6 über das Druckbegrenzungsventil 26 und das Vorsteuerventil 28 ab.

Zur Energiespeicherung ist an die Druckleitung 58 zwischen dem Prioritätsventil 60 und dem Anschluss der Kombinationsleitung 74 über eine Speicherleitung 78 ein Hydrospeicher 80 angeschlossen. Dieser kann in einem Bremsbetrieb des Fahrzeugs, das mit dem erfindungsgemäßen hydrostatischen Antrieb ausgestattet ist aufgeladen werden. Ein Druckmittel Zu- und Abstrom zum Hydrospeicher 80 wird über ein in der Speicherleitung 78 angeordnetes Speicherladeventil 82 gesteuert. Das Speicherladeventil 82 ist über eine elektrische Steuerleitung 84 mit der ECU 50 verbunden. Vom Hydrospeicher 80 aus können die Verbraucher des Kreislaufs 4 oder die Hydromaschine 14, die dann als Hydromotor arbeitet, bis zu einem vorgegebenen Ladezustand des Hydrospeichers mit Druckmittel versorgt werden. Die Hydromaschine 14 kann dann zum antrieb der Konstantpumpe 6 oder zum Antrieb des Fahrzeugs insbesondere bei Beschleunigungsvorgängen verwendet werden.

Offenbart ist ein hydrostatischer Antrieb, insbesondere ein hydrostatischer Lüfterantrieb, mit einer hydraulischen Konstantpumpe, über die beispielsweise ein Hydromotor für einen Lüfter angetrieben ist. Des Weiteren weist der Antrieb eine Hydromaschine zur Druckmittelversorgung eines zweiten hydraulischen Kreislaufs auf. Die Konstantpumpe ist dabei mit der Hydromaschine hydraulisch kombinierbar.

### Bezugszeichenliste

- 1: Antrieb
- 2: erster Kreislauf
- 4: zweiter Kreislauf
- 6: Konstantpumpe
- 8: Konstantmotor
- 10: Antriebswelle
- 12: Lüfterrad
- 14: Hydromaschine
- 16: Welle
- 18: Tankleitung
- 20: Tank
- 22: Druckleitung
- 24: Abströmleitung
- 26: Druckbegrenzungsventil (DBV)
- 28: Vorsteuerventil
- 30: Zweigleitung
- 32: Tankleitung
- 34: Steuerleitung
- 35: Feder
- 36: Vorsteuerleitung
- 38: Tankleitung
- 40: Steuerleitung
- 42: Steueröldüse
- 44: Feder
- 46: Aktuator
- 48: Steuerleitung
- 50: ECU
- 52: Meldeleitung
- 54: Verstellvorrichtung / DFR
- 56: Tankleitung
- 58: Druckleitung
- 60: Prioritätsventil
- 62: Lenkleitung
- 64: Arbeitsleitung
- 66: Rückschlagventil
- 68: Lastmeideleitung
- 70: Wechselventil
- 72: Verbindungsleitung
- 74: Kombinationsleitung
- 76: Kombinationsventil / Rückschlagventil
- 78: Speicherleitung
- 80: Hydrospeicher
- 82: Speicherladeventil
- 84: Steuerleitung

## Patentansprüche

1. Hydrostatischer Antrieb mit einer Konstantpumpe (6) zur Druckmittelversorgung eines ersten hydraulischen Kreislaufs (2), insbesondere zum Antreiben eines Hydromotors (8) für einen Lüfter, und mit einer Hydromaschine (14) zur Druckmittelversorgung eines zweiten hydraulischen Kreislaufs (4), insbesondere zur Druckmittelversorgung wenigstens eines Verbrauchers, **dadurch gekennzeichnet, dass** die Konstantpumpe (6) mit der Hydromaschine (14) hydraulisch kombinierbar ist.

2. Hydrostatischer Antrieb nach Anspruch 1, wobei der erste Kreislauf (2) über ein Kombinationsventil (76) mit dem zweiten Kreislauf (4) zur Kombination der Konstantpumpe (6) mit der Hydromaschine (14) verbindbar ist.

3. Hydrostatischer Antrieb nach Anspruch 2, wobei das Kombinationsventil (76) ein in Strömungsrichtung hin zum zweiten Kreislauf (4) öffnendes Rückschlagventil (76) ist.

4. Hydrostatischer Antrieb nach einem der vorhergehenden Ansprüche, wobei eine Verstellvorrichtung (54) zum Einstellen eines Verdrängungsvolumens der Hydromaschine (14) in Abhängigkeit vom Betriebszustand im ersten hydraulischen Kreislauf (2) oder in Abhängigkeit eines höchsten Lastdrucks der Verbraucher verstellbar ist.

5. Hydrostatischer Antrieb nach Anspruch 4, wobei die Verstellvorrichtung (54) der Hydromaschine (14) so eingestellt wird, vorzugsweise aus dem ersten hydraulischen Kreislauf (2) ein solcher Druck an die Verstellvorrichtung (54) gemeldet wird, dass der Druck am Druckanschluss der Hydromaschine (14) dem notwendigen Druck im ersten Kreislauf (2) entspricht.

6. Hydrostatischer Antrieb nach einem der vorhergehenden Ansprüche, wobei der Pumpendruck im ersten hydraulischen Kreislauf (2) über ein vorgesteuertes Druckbegrenzungsventil (26) begrenzt ist, dessen Schließkörper in Schließrichtung von einem über ein verstellbares Vorsteuerventil (28) einstellbaren Schließdruck beaufschlagt ist, wobei der Schließdruck an die Verstellvorrichtung (54) gemeldet ist.

7. Hydrostatischer Antrieb nach einem der vorhergehenden Ansprüche, wobei bei einer Kombination die Konstantpumpe (6) von der als Hydromotor betriebenen Hydromaschine (14) mechanisch antreibbar ist.

8. Hydrostatischer Antrieb nach einem der vorhergehenden Ansprüche, wobei an den zweiten hydraulischen Kreislauf (4) ein Hydrospeicher (80) angeschlossen ist.

9. Hydrostatischer Antrieb nach Anspruch 8, wobei der Hydrospeicher (80) über ein Speicherladeventil (82) gesteuert ist.

10. Hydrostatischer Antrieb nach einem der Ansprüche 6 bis 9, wobei das Vorsteuerventil (28) und/ oder das Speicherladeventil (82) von einer Electronic Control Unit (50) gesteuert sind.

11. Hydrostatischer Antrieb nach einem der vorhergehenden Ansprüche, wobei die Konstantpumpe (6) und die Hydromaschine (14) über eine gemeinsame Antriebswelle (16) mechanische miteinander verbunden sind.

12. Hydrostatischer Antrieb nach einem der vorhergehenden Ansprüche, wobei die Hydromaschine (14) eine Verstellmaschine mit einem stufenlos über null verstellbaren Hubvolumen ist.

## Claims

1. Hydrostatic drive comprising a constant-displacement pump (6) for supplying a first hydraulic circuit (2) with a pressure medium, in particular for driving a hydraulic motor (8) for a fan, and having a hydraulic machine (14) for supplying a second hydraulic circuit (4) with a pressure medium, in particular for supplying at least one consumer with a pressure medium, **characterized in that** the constant pump (6) can be combined hydraulically with the hydraulic machine (14).

2. Hydrostatic drive according to Claim 1, wherein the first circuit (2) can be connected via a combination valve (76) to the second circuit (4) for combining the constant-displacement pump (6) with the hydraulic machine (14).

3. Hydrostatic drive according to Claim 2, wherein the combination valve (76) is a non-return valve (76) which opens in the direction of flow to the second circuit (4).

4. Hydrostatic drive according to one of the preceding claims, wherein an adjustment device (54) for setting a displacement volume of the hydraulic machine (14) can be adjusted as a function of the operating state in the first hydraulic circuit (2) or as a function of a maximum load pressure of the consumers.

5. Hydrostatic drive according to Claim 4, wherein the adjustment device (54) of the hydraulic machine (14) is set in such a way, preferably such a pressure is signaled from the first hydraulic circuit (2) to the adjustment device (54), that the pressure at the pressure connection of the hydraulic machine (14) corresponds to the necessary pressure in the first circuit (2).

6. Hydrostatic drive according to one of the preceding claims, wherein the pump pressure in the first hydraulic circuit (2) is limited by means of a pilot-controlled pressure-limiting valve (26) whose closing body is acted on in the closing direction by a closing pressure which can be set by means of an adjustable pilot control valve (28), wherein the closing pressure is signaled to the adjustment device (54).

7. Hydrostatic drive according to one of the preceding claims, wherein in the case of a combination the constant-displacement pump (6) can be driven mechanically by the hydraulic machine (14) which is operated as a hydraulic motor.

8. Hydrostatic drive according to one of the preceding claims, wherein a hydraulic accumulator (80) is connected to the second hydraulic circuit (4).

9. Hydrostatic drive according to Claim 8, wherein the hydraulic accumulator (80) is controlled by means of an accumulator charge valve (82).

10. Hydrostatic drive according to one of Claims 6 to 9, wherein the pilot control valve (28) and/or the accumulator charge valve (82) are controlled by an electronic control unit (50).

11. Hydrostatic drive according to one of the preceding claims, wherein the constant-displacement pump (6) and the hydraulic machine (14) are mechanically connected to one another via a common driveshaft (16).

12. Hydrostatic drive according to one of the preceding claims, wherein the hydraulic machine (14) is an adjustment machine with an adjustable stroke volume which can be adjusted infinitely above zero.

## Revendications

1. Entraînement hydrostatique comprenant une pompe à cylindrée constante (6) pour l'alimentation en fluide sous pression d'un premier circuit hydraulique (2), en particulier pour l'entraînement d'un moteur hydraulique (8) pour un ventilateur, et comprenant une machine hydraulique (14) pour l'alimentation en fluide sous pression d'un deuxième circuit hydraulique (4), en particulier pour l'alimentation en fluide sous pression d'au moins un consommateur, **caractérisé en ce que** la pompe à cylindrée constante (6) peut être combinée hydrauliquement avec la machine hydraulique (14).

2. Entraînement hydrostatique selon la revendication 1, dans lequel le premier circuit (2) peut être relié au deuxième circuit (4) par le biais d'une soupape de combinaison (76) en vue de la combinaison de la pompe à cylindrée constante (6) avec la machine hydraulique (14).

3. Entraînement hydrostatique selon la revendication 2, dans lequel la soupape de combinaison (76) est une soupape de non-retour (76) s'ouvrant dans le sens d'écoulement vers le deuxième circuit (4).

4. Entraînement hydrostatique selon l'une quelconque des revendications précédentes, dans lequel un dispositif de réglage (54) pour ajuster un volume de refoulement de la machine hydraulique (14) peut être réglé en fonction de l'état de fonctionnement dans le premier circuit hydraulique (2) ou en fonction d'une pression maximale de charge des consommateurs.

5. Entraînement hydrostatique selon la revendication 4, dans lequel le dispositif de réglage (54) de la machine hydraulique (14) est ajusté de telle sorte, de préférence une pression telle est signalée au dispositif de réglage (54) à partir du premier circuit hydraulique (2), que la pression au niveau du raccord de pression de la machine hydraulique (14) corresponde à la pression nécessaire dans le premier circuit (2).

6. Entraînement hydrostatique selon l'une quelconque des revendications précédentes, dans lequel la pression de pompe dans le premier circuit hydraulique (2) est limitée au moyen d'une soupape de limitation de pression pilotée (26), dont le corps de fermeture est sollicité dans le sens de fermeture par une pression de fermeture pouvant être ajustée par le biais d'une soupape pilote réglable (28), la pression de fermeture étant signalée au dispositif de réglage (54).

7. Entraînement hydrostatique selon l'une quelconque des revendications précédentes, dans lequel, en cas de combinaison, la pompe à cylindrée constante (6) peut être entraînée mécaniquement par la machine hydraulique (14) fonctionnant en tant que moteur hydraulique.

8. Entraînement hydrostatique selon l'une quelconque des revendications précédentes, dans lequel un accumulateur hydraulique (80) est raccordé au deuxième circuit hydraulique (4).

9. Entraînement hydrostatique selon la revendication 8, dans lequel l'accumulateur hydraulique (80) est commandé par le biais d'une soupape de charge d'accumulateur (82).

10. Entraînement hydrostatique selon l'une quelconque des revendications 6 à 9, dans lequel la soupape pilote (28) et/ou la soupape de charge d'accumulateur (82) est/sont commandée(s) par une unité de commande électronique (50).

11. Entraînement hydrostatique selon l'une quelconque des revendications précédentes, dans lequel la pompe à cylindrée constante (6) et la machine hydraulique (14) sont reliées mécaniquement l'une à l'autre par le biais d'un arbre d'entraînement commun (16).

12. Entraînement hydrostatique selon l'une quelconque des revendications précédentes, dans lequel la machine hydraulique (14) est une machine de réglage présentant une cylindrée réglable en continu au-dessus de zéro.
